(19) **Europäisches Patentamt / European Patent Office / Office européen des brevets**

(11) **EP 1 729 485 B1**

(12) **EUROPEAN PATENT SPECIFICATION**

(45) Date of publication and mention
of the grant of the patent:
**30.07.2008 Bulletin 2008/31**

(51) Int Cl.:
***H04L 29/12*** *(2006.01)*

(21) Application number: **06252800.5**

(22) Date of filing: **31.05.2006**

(54) **Communication device and program employed by the same**

Kommunikationsgerät und dadurch benutztes Programm

Dispositif de communication et programme utilisé par ledit dispositif

(84) Designated Contracting States:
**DE FR GB**

(30) Priority: **31.05.2005 JP 2005159972**

(43) Date of publication of application:
**06.12.2006 Bulletin 2006/49**

(73) Proprietor: **Brother Kogyo Kabushiki Kaisha
Nagoya-shi, Aichi-ken 467-8561 (JP)**

(72) Inventor: **Seki, Takao
c/o Brother Kogyo Kabushiki kaisha
Nagoya, Aichi 467-8562 (JP)**

(74) Representative: **Smith, Samuel Leonard
J.A. Kemp & Co.
14 South Square
Gray's Inn
London WC1R 5JJ (GB)**

(56) References cited:
WO-A-20/04042999          US-A1- 2004 122 974
US-A1- 2005 097 360       US-A1- 2005 114 544

- REHMAN K U ET AL: "DICOM configuration management" COMPUTER-BASED MEDICAL SYSTEMS, 2004. CBMS 2004. PROCEEDINGS. 17TH IEEE SYMPOSIUM ON BETHESDA, MD, USA 24-25 JUNE 2004, PISCATAWAY, NJ, USA, IEEE, 24 June 2004 (2004-06-24), pages 180-184, XP010707991 ISBN: 0-7695-2104-5

# Description

## Cross-Reference to Related Application

This application claims priority from Japanese Patent Application No. 2005-159972, filed on May 31, 2005..

## Technical Field

The following description relates to a communication device configured to obtain data that may be used for setting an address therefor from devices on a network, and automatically set the address therefor, and a program employed by the communication device.

## Background

Conventionally, there is known a communication device configured to request a DHCP (Dynamic Host Configuration Protocol) server on a network to issue (lease) an IP (Internet Protocol) address, and set the IP address issued from the DHCP server in the communication therefor so as to allow itself to join a TCP/IP network.

In addition, there is known another communication device configured to obtain a part (for example, a network address) of IP address to be set therefor from a router that connects a network to another one, generate an address specific thereto, and set an address, generated by linking the generated address specific thereto and a part of the obtained IP address, therefore so as to allow itself to join the TCP/IP network.

Further, there is known a communication device having a function of restricting external access based upon a restriction table provided therein comprising access-allowed IP addresses and access-forbidden ones. Such a communication device is very useful for preventing external unauthorized access.

However, according to the aforementioned communication device, when an unsuitable IP address is registered in the restriction table, the access from the registered unsuitable IP address is restricted based upon the restriction table. In other words, when the IP address of the DHCP server is mistakenly registered, there is a problem that access from the DHCP server, which should not really be restricted, might be restricted.

When the access from the DHCP server to the aforementioned communication device is not allowed due to an unsuitable setting operation for the restriction table, the communication device cannot set and update its IP address. Consequently, the communication device cannot join the TCP/IP network.

Of course, such a problem will not occur, if an administrator does not register the unsuitable IP address on the restriction table. However, in such a communication device that the access-allowed or access-forbidden IP addresses are specified with a range for specifying the access-allowed or access-forbidden IP addresses being designated by the administrator, the administrator might be unaware of that an IP address of a device such as the DHCP server and router, by which the communication device is required to be accessed to set its IP address, is comprised in the range for specifying the access-forbidden IP address designated by the administrator. In addition, when the administrator registers the access-allowed IP address, the administrator has his attention caught by an operation for registering IP addresses of devices other than the DHCP server etc. For this reason, the administrator might forget an operation of registering the IP address of the DHCP server etc.

US-A-2005/097360 discloses a communication device and a method according to the pre-characterising sections of claims 1, 10, 13 and 14.

US-A-2005/114544 discloses a method and system for managing a secure configuration of a server blade on a network. When the server blade broadcasts a request for configuration parameters to join the network, a response offer is returned from a DHCP server. If the responding DHCP server is not on the list of trusted DHCP servers contained in the remote supervisory adaptor card, then the offer is refused, and another DHCP server's offer is evaluated.

WO-A-2004/042999 discloses a network including a switch with ports to subscribers and a port to a core network with DHCP servers. When the subscriber requests an IP address it is checked that it is a DHCP message with valid subscriber values. A response with an allocated IP address and lease time interval is checked to come from a trusted DHCP server. If so, a list in the filter with correct information is dynamically generated. A message from the subscriber with false IP address is discarded by the filter.

## Summary

Aspects of the present invention are advantageous in that one or more advanced techniques that can prevent a communication device from not being able to automatically set an address therefor due to unsuitable settings for the communication device configured by an administrator can be provided.

According to aspects of the present invention, there is provided a communication device, comprising: a network interface; a process executing system configured to communicate with devices on a network via the network interface, and execute a process based upon data received from the devices via the network interface; an acceptance judging system configured to judge whether to accept the data received via the network interface in accordance with a predetermined judgment criterion; and an execution control system configured to selectively make the process executing system execute a process based upon data judged to be accepted by the acceptance judging system, characterized in that: the acceptance judging system is configured to judge data, which are to be received from specified king of devices of the devices on the network via the network interface as data setting an address on the network for the communication device, to be accepted regardless of the predetermined judgment criterion. Thus, process executing system is configured to receive data that may be used for setting an address on the network for the communication device from a specified kind of devices on the network after the communication device has been booted, and execute a process for setting the address for the communication device based upon the received data. The acceptance judging system is configured to judge data, which the network interface has received as data that may be used for setting the address on the network for the communication device to be accepted.

The process executing system comprised in the aforementioned communication device, after the communication device has been booted, receives the data that may be used for setting the address on the network for the communication device from the specified kind of devices on the network, and executes the process for setting the address for the communication device based upon the received data. In addition, the acceptance judging system judges the data received by the network interface to be accepted, when the received data may be used for setting the address for the communication device.

Thus, according to one or more aspects of the present invention, when the received data may be used for setting the address for the communication device, exceptionally, the received data are judged to be accepted regardless of the predetermined judgment criterion. Therefore, according to one or more aspects of the present invention, even when a user sets such a judgment criterion that a specified kind of devices on the network such as the DHCP servers are not allowed to access the communication device, the execution control system cannot interrupt the access from the specified kind of devices. Namely, according to one or more aspects of the present invention, the communication device is prevented from not being able to automatically set the address therefor due to unsuitable settings for the communication device configured by an administrator.

It is noted that the communication device may be configured such that a conventional filtering function is not set ON until the address has been set therefor in order to prevent the address from not being set automatically due to the mistake by the administrator. However, in general, time of validity is set for the IP address issued by the DHCP server and the like. Accordingly, even though the communication device is configured such that the filtering function is not set ON until the address has been set therefor, when the issued IP address has the time of validity, it is impossible to set the address for the communication device again after the filtering function has been set ON once in the case of the mistake being made by the administrator.

In contrast, according to one or more aspects of the present invention, the data that may be used for setting the address are always judged to be accepted. Therefore, even in the case of the communication device communicating with the specified kind of devices before the time of validity of the address elapses to repeatedly execute the process for setting the address therefor, the communication device is prevented from not being able to automatically set the address therefore due to the unsuitable settings for the communication device configured by the administrator.

In other words, the process executing system is configured to repeatedly execute a process of communicating with the specified kind of devices before a time period during which the address set for the communication device is valid elapses to set the address for the communication device. Thereby, the aforementioned effect can be brought out further.

In the meantime, according to one or more aspects of the present invention, the communication device may be configured such that the execution control system intervenes between the network interface and the process executing system to provide the data that the acceptance judging system has judged to be accepted to the process executing system, and renounce the data that the acceptance judging system has judged not to be accepted without providing the data to the process executing system. In addition, the communication device may be configured such that the process executing system actively obtains the received data from the network interface, and the execution control system renounces the data that the acceptance judging system has judged not to be accepted from the network interface (buffer) before the process executing system obtains the received data.

Hereinabove, there is cited as the specified kind of device the DHCP server. However, in view of a network based upon IPv6 (Internet Protocol Version 6), there can be cited as the specified kind of device a router that maintains a prefix of the IP address etc.

In addition, when considering the DHCP server as the specified kind of device, optionally, the process executing system may be configured to request each of the specified kind of devices to issue an address for the communication device via the network interface in response to starting the process to set the address for the communication device. Optionally, the acceptance judging system may be configured to judge response data to the request, which the network interface has received as the data that may be used for setting the address for the communication device, to be accepted.

When automatically setting the address for the communication device using the DHCP server, if the communication device voluntarily receives the data that may be used for setting the address from the specified kind of devices, and treats the response data to the request issued from the communication device as the data that may be used for setting the address, it is possible to easily judge whether the received data may be used for setting the address. Therefore, the acceptance judging system can make the judgment fast.

In addition, if the communication device is configured to communicate with the specified kind of devices (request the specified kind of devices to issue the address and receive the response data therefrom) via a dedicated port, the communication device is advantageous in that the data received via the dedicated port can be treated as the data that may be used for setting the address.

Namely, optionally, the process executing system may be configured to request the specified kind of devices to issue the address for the communication device via a dedicated port, and receive the response data to the request from the specified kind of devices via the dedicated port. Optionally, the acceptance judging system may be configured to judge data, which the network interface has received as data to be transmitted to the dedicated port, to be accepted.

According to some aspects, since the data received via the dedicated port are judged as the data that may be used for setting the address, the acceptance judging system can make the judgment fast.

Optionally, the response data may be transmitted from a DHCP (Dynamic Host Configuration Protocol) server, and comprise information on an IP address issued for the communication device. Optionally, the process executing system may be configured to set an IP address for the communication device based upon the information on the IP address issued for the communication device that is comprised in the response data received from the DHCP server via the network interface.

According to some aspects, to automatically set the IP address using the DHCP server is not interrupted by the filtering function attained by the acceptance judging system and the execution control system. Therefore, the communication device is prevented from not being able to automatically set the address therefor using the DHCP server.

Optionally, the acceptance judging system may be configured to judge data, which the network interface has received as data transmitted from previously defined unacceptable devices, not to be accepted.

In the communication device provided with the acceptance judging system thus configured, even when the administrator mistakenly sets the DHCP servers as the unacceptable devices, to automatically set the address using the DHCP server is not interrupted by the operation of the execution control system. Accordingly, according to some aspects, the communication device is prevented from not being able to automatically set the address therefor due to the mistake by the administrator.

Optionally, the acceptance judging system may be configured to judge data, which the network interface has received as data transmitted from previously defined acceptable devices, to be accepted.

In the communication device provided with the acceptance judging system thus configured, even when the administrator mistakenly forgets to set the DHCP servers as the acceptable devices, to automatically set the address using the DHCP server is not interrupted by the operation of the execution control system. Hence, according to some aspects, the communication device is prevented from not being able to automatically set the address therefor due to the mistake by the administrator.

Optionally, the communication device may further comprise a boot control system configured to boot the acceptance judging system and the execution control system in response to the address being set for the communication device. If the communication device is configured such that the filtering function is not set ON until the address is set for the communication device, the initial address setting will be not interrupted even in the case of the administrator making the mistake. In addition, if the acceptance judging system and the execution control system that attain the filtering function are booted after the address has been set, a load of the initial address setting process can be reduced compared with the case where the acceptance judging system is operated prior to the initial address setting.

In addition, according to techniques of automatic address setting based upon IPv6, the time of validity is not sometimes set for the IP address. Accordingly, the communication device may be configured as follows.

According to another aspect of the present invention, there is provided a communication device, comprising: a network interface; a process executing system configured to communicate with devices on a network via the network interface, and execute a process based upon data received from the devices via the network interface, the process executing system being configured to receive data that may be used for setting an address on the network for the communication device from a specified kind of devices of the devices on the network after the communication device has been booted, and execute a process for setting the address for the communication device based upon the received data; an acceptance judging system configured to judge whether to accept the data received via the network interface in accordance with a predetermined judgment criterion; an execution control system configured to selectively make the process executing system execute a process based upon data judged to be accepted by the acceptance judging system, characterized in that the communication device further comprises: a boot control system configured to boot the acceptance judging system and the execution control system in response to an initial address being set for the communication device.

According to the aforementioned communication device, since the acceptance judging system and the execution control system are not operated, and the filtering function is not set ON until the address is set, the communication device is prevented from not being able to automatically set the address therefor due to the mistake by the administrator.

According to another aspect, there is provided a method with which a communication device comprising a network interface sets an address on a network therefor, comprising: communicating with devices on the network via the network interface to receive data from the devices; and judging whether to accept the data received via the network interface in said communicating as data that may be used for setting the address on the network for the communication device in accordance with a pre-determined judgment criterion, characterized in that: the step of judging further comprises judging data, which are received from specified kind of devices of the devices on the network, via the network interface, as data for setting an address on the network for the communication device, to be accepted regardless of the pre-determined judgment criterion.

According to another aspect there is provided a method with which a communication device comprising a network interface sets an address on a network therefor, comprising: communicating with devices on the network via the network interface to receive data that may be used for setting an address on the network for the communication device from a specified kind of devices of the devices on the network after the communication, device has been booted; judging whether to accept the data received from the specified kind of devices in said communicating in accordance with a predetermined judgment criterion; and executing a process for setting the address for the communication device based upon the data that is judged to be accepted in said judging, characterized in that: the steps of said judging and said executing are set ready in response to an initial address being set for the communication device.

According to another aspect there is provided a computer program containing instructions for causing a computer to execute the method of either of the two aforementioned methods when the program is executed on a computer.

Brief Description of the Accompanying Drawings

Fig. 1 is an illustration schematically showing a configuration of a communication system provided with a printing device according to one or more aspects of the present invention.
Fig. 2 is an illustration schematically showing a receiving operation of a communication control portion in the printing device in accordance with one or more aspects of the present invention.
Fig. 3 is an illustration schematically showing a configuration of filtering setting data in accordance with one or more aspects of the present invention.
Fig. 4 is an illustration schematically showing an operation of a setting change process task in accordance with one or more aspects of the present invention.
Fig. 5 is a flowchart showing a boot process that a CPU of the printing device executes immediately after the CPU has been booted in accordance with one or more aspects of the present invention.
Fig. 6 is a flowchart showing a process performed by a DHCP client process task in accordance with one or more aspects of the present invention.
Fig. 7 is a flowchart showing an address obtaining process performed by the DHCP client process task in accordance with one or more aspects of the present invention.
Fig. 8 is a flowchart showing a receiving control process executed by the communication control portion in accordance with one or more aspects of the present invention.

Detailed Description

It is noted that various connections are set forth between elements in the following description. It is noted that these connections in general and, unless specified otherwise, may be direct or indirect and that this specification is not intended to be limiting in this respect.

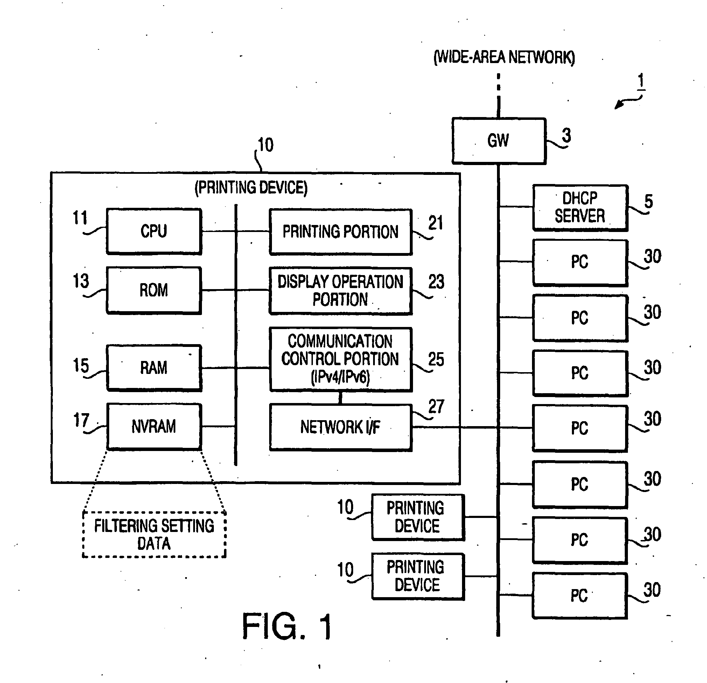

Hereinafter, an illustrative example according to the present invention will be explained with reference to the accompanying drawings. Fig. 1 is an illustration schematically showing a configuration of a communication system 1 provided with printing devices 10 according to one or more aspects of the present invention. The communication system 1 comprises a gateway device 3 connected to a wide-area network, DHCP server(s) 5, printing devices 10, and personal computers (PCs) 30. The printing devices 10, PCs 30, and DHCP server(s) 5 are configured capable of TCP/IP communication, respectively. In this communication system 1, there is established a local area network (LAN) comprising the printing devices 10, PCs 30, and DHCP server(s) 5.

The printing device 10 is provided with a CPU 11 that executes various programs and controls each portions comprised therein, ROM 13 that stores the various programs executed by the CPU 11, RAM 15 employed as a working area while the CPU 11 is executing a program, NVRAM 17 as a non-volatile rewritable memory configured to store various setting data, printing portion 21 that is controlled by the CPU 11 to form (print) an image on a paper medium, display operation portion 23 provided with a displaying portion (for example, liquid crystal display monitor) and operating portion (key group) configured user-operable, communication control portion 25 configured to control based upon TCP/IP, and network interface (so-called LAN interface) 27 connected with the LAN.

It is noted that although the communication control potion 25 and the CPU 11 are separately shown in Fig. 1, the communication control portion 25 may be configured with a dedicated device (for example, a dedicated micro computer), or may be actualized with a software group (protocol stack) for attaining the TCP/IP communication being executed by the CPU 11. In this the illustrative example, processes in the communication control portion 25 are performed with programs.

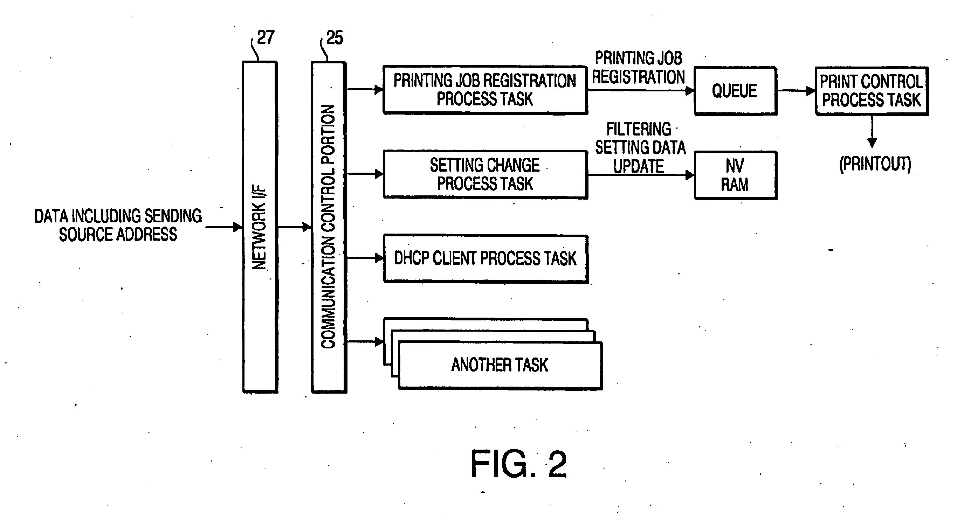

In addition, the communication system 1 in this illustrative example is configured such that tasks for attaining predetermined functions with the printing device 10 communicating with other devices on the LAN are executed by the CPU 11. In this case, the communication control portion 25 relays data transferred between the tasks and other devices on the LAN. Fig. 2 is an illustration schematically showing an operation (receiving operation) of the communication control portion 25 in the printing device 10.

The communication control portion 25 executes predetermined processing for transmission data generated by each of the aforementioned tasks to convert the transmission data into an IP packet, and then, outputs the packet as the transmission data to the network interface 27. Meanwhile, the network interface 27 converts the transmission data generated by the communication control portion 25 into an electrical signal to be sent to the LAN, and outputs the electrical signal to the LAN. At the same time, the network interface 27 converts an electrical signal received from the LAN into digital data to be received by the communication control portion 25, and store the digital data in a buffer incorporated therein.

The communication control portion 25 takes the received digital data out of the buffer of the network interface 27, and determines a task as a destination of the received digital data based upon information such as a port number indicated by the received digital data to provide the received digital data to the determined task.

For example, when the port number indicated by the received data is a port number for network printing, the communication control portion 25 provides the received data to a printing job registration process task. It is noted that the printing job registration process task is configured to communicate with the PC 30 via the communication control portion 25 and network interface 27, and register a printing job regarding print data stored in a printing command data in a queue when receiving the printing command data from the PC 30. The printing job registered in the queue is processes by a print control process task. More specifically, the print control process task executes the printing jobs registered in the queue in the order of jobs from the oldest to the newest, and makes the printing portion 21 print out an image based upon the print data.

In addition, the communication control portion 25 provides the received data to a setting change process task when the port number indicated by the received data is a port number for a setting change. The setting change process task communicates with the PC 30 via the communication control portion 25 and network interface 27. When the setting change process task has received a setting command data generated by an input operation being given to the PC 30 from a user, the setting change process task updates a filtering setting data stored in the NVRAM 17 based upon the setting command data, and perform the setting change with respect to a filtering function of the printing device 10.

It is noted that the communication control portion 25 of this illustrative example, which has a filtering function, operates based upon the filtering setting data stored in the NVRAM 17. The communication control portion 25 is configured to renounce the received data with a predetermined IP address as a sending source address during a time period of the filtering function being set ON so as to prevent a corresponding one of the tasks from providing the received data. As well known, in the IP communication, since information on the IP address of the sending source that has sent the IP packet is added to the IP packet, the communication control portion 25 renounces the received data with the predetermined IP address as the sending source address based upon the information on the sending source address.

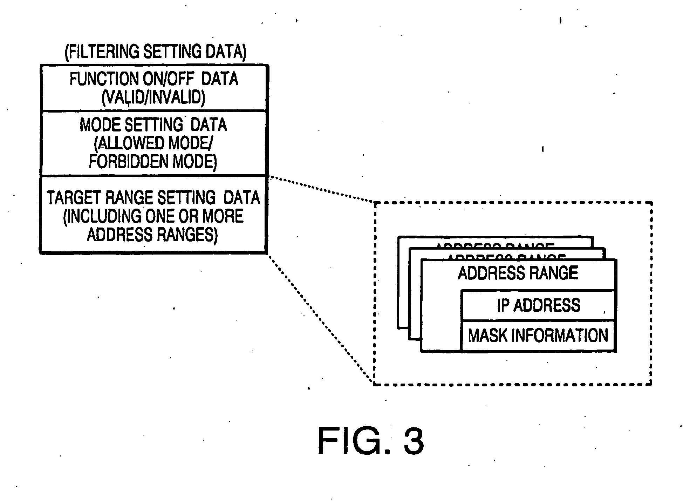

Fig. 3 is an illustration schematically showing a configuration of the filtering setting data stored in the NVRAM 17 of the printing device 10. The filtering setting data are data that determines an operation of the filtering function, and comprises function ON/OFF setting data, mode setting data, and target range setting data.

The function ON/OFF data are data for switching ON/OFF of the filtering function, and indicate any value between "valid" and "invalid". When the function ON/OFF data indicate a value of "valid", the communication control portion 25 sets the filtering function ON. When the function ON/OFF data indicate a value of "invalid", the communication control portion 25 sets the filtering function OFF.

In addition, the mode setting data are data indicating any value between "allowed mode" and "forbidden mode". Although mentioned later in detail, when the mode setting data indicate a value of "allowed mode", the communication control portion 25 in this illustrative example accepts data transmitted from devices to which the IP addresses within a range indicated by the target range setting data are assigned, and provides the accepted data to a corresponding one of the tasks. Further, the communication control portion 25 forbids accepting data transmitted from the other devices, and renounces the forbidden data.

Further, when the mode setting data indicate a value of "forbidden mode", the communication control portion 25 forbids accepting the data transmitted from the devices to which the IP addresses within the range indicated by the target range setting data are assigned to renounce the forbidden data, and accepts the data transmitted from the other devices to provide the accepted data to a corresponding one of the tasks.

In addition, the target range setting data are data indicating ranges of the IP addresses regarded as targets of filtering (address ranges). The address range is described with information on the IP address and mask information showing a valid address value. For example, when the information on the IP address is "10.134.0.0", and the mask information is "255.255.0.0", the IP address with high 16 bits of a value "10.134" is regarded as the target of filtering.

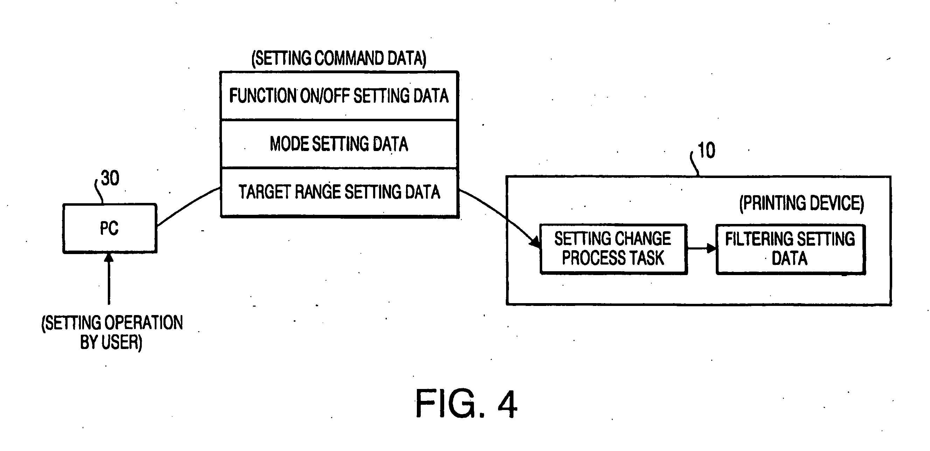

Namely, in the setting command data transmitted from the PC 30, there are comprised the function ON/OFF setting data, mode setting data, and target range setting data. When receiving the setting command data via the communication control portion 25, the setting change process task updates each value of the filtering setting data such that each value of the filtering setting data conforms to a corresponding value of the setting command data, so as to perform the setting change in accordance with the setting command data. It is noted that Fig. 4 is an illustration schematically showing an operation of the setting change process task.

In addition, when the port number indicated by the received data indicates a port number for the DHCP, the communication control portion 25 provides the received data to a DHCP client process task. It is noted that the DHCP client process task is configured to communicate with the DHCP server 5 to set the IP address issued (leased) from the DHCP server 5 for the communication control portion 25 of the printing device 10 in which the DHCP client process task is incorporated. The printing device 10 in this illustrative example carries out automatic setting of the IP address with the operation of the DHCP client process task to set itself capable of joining the TCP/IP network. Namely, the printing device 10 sets itself capable of the unicast communication with the devices on the LAN according to TCP/IP.

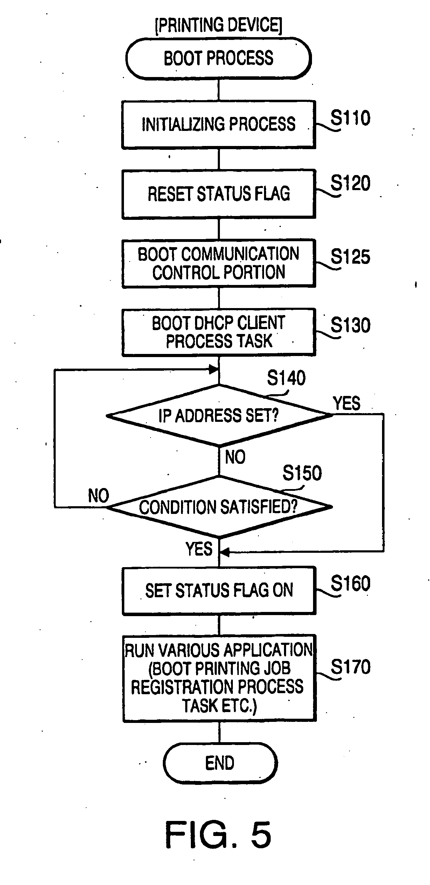

Next, an operation of the printing device 10 will be explained in detail using a flowchart. Fig. 5 is a flowchart showing a boot process that the CPU 11 of the printing device 10 executes according to a boot program immediately after the CPU 11 has been booted (immediately after the printing device 10 has been powered ON).

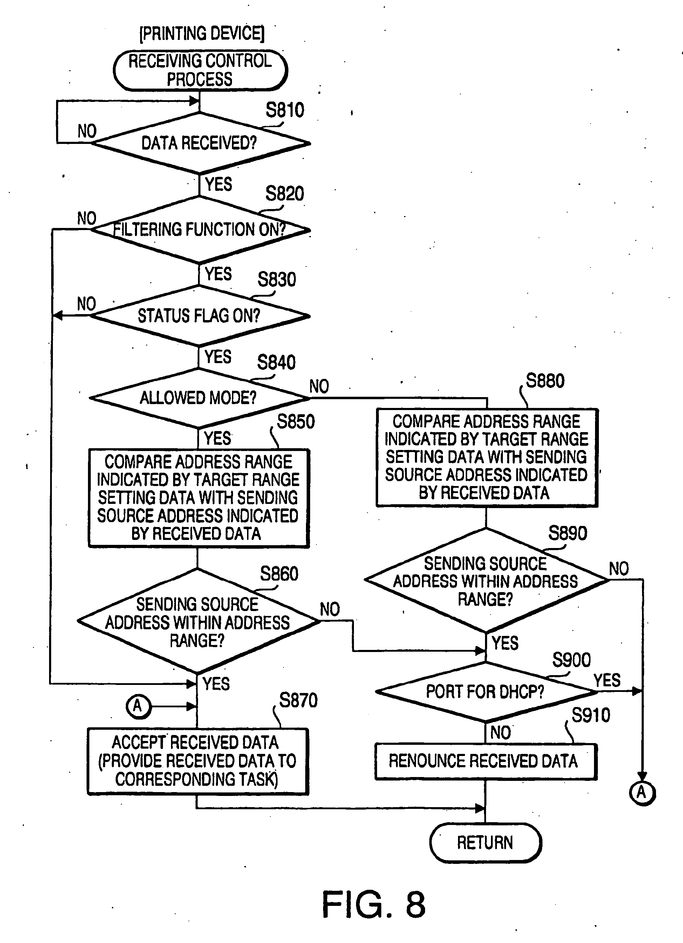

In the boot process, the CPU 11 initially executes an initializing process to initialize each portion in the device (S 110). After that, the CPU 11 resets a status flag to be set OFF (S120). It is noted that the value (ON/OFF) of the status flag is stored in the RAM 15. Although mentioned later in detail, the status flag is employed to set the filtering function of the communication control portion 25 ON/OFF (see Fig. 8).

After the step of S120, the CPU 11 boots the communication control portion 25 in a step of S125, and boots the DHCP client process task in a step of S 130. In addition, after the DHCP client process task has been booted, the CPU 11 judges whether the IP address is set for the printing device 10 according to the operation of the DHCP client process task (S140). When the IP address is not set (S140: No), it is judged whether a predetermined standby terminating condition is satisfied (S150). It is noted that the boot program may be configured such that it is judged that the standby terminating condition is satisfied when a predetermined time period has elapsed in the step of S 150. In addition, the boot program may be configured such that it is judged that the standby terminating condition is satisfied when the number of processes executed to obtain the IP address (for example, the below-mentioned parameter retry count value) has exceeded a predetermined number.

Here, when it is judged that the standby terminating condition is not satisfied (S150: No), the CPU 1 standbys until the IP address has been set, or the standby terminating condition has been satisfied. When the IP address has been set (S140: Yes), or the standby terminating condition has been satisfied (S 150: Yes), the process goes to a step of S 160 to set the status flag stored in the RAM 15 ON.

Further, after the step of S 160, the CPU 11 runs predetermined various application programs to boot the aforementioned printing job registration process task, the setting change process task, and the like (S 170). Thereafter, the boot process is terminated.

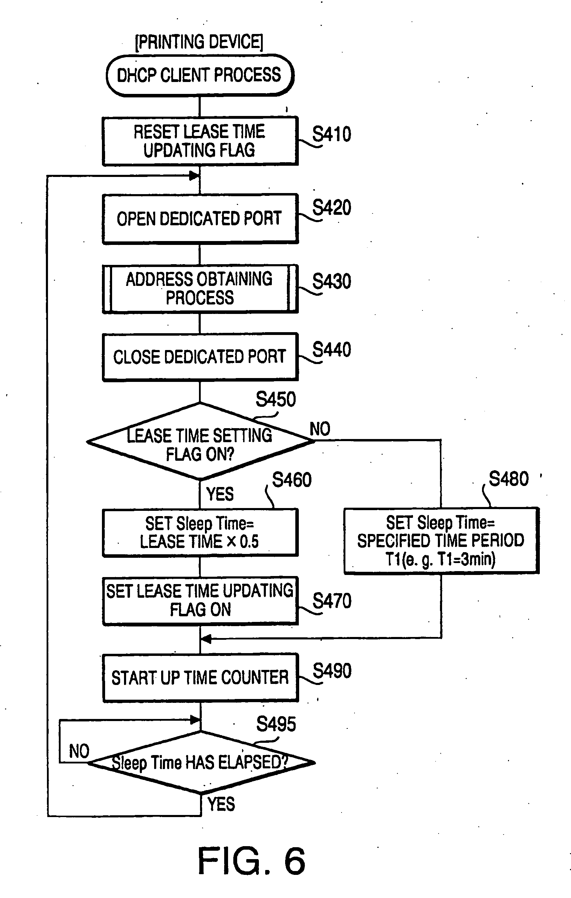

Next, the DHCP client process task executed in the step of S 130 will be explained. Fig. 6 is a flowchart showing the DHCP client process performed by the DHCP client process task (CPU 11). The DHCP client process task executes the DHCP client process according to the program stored in the ROM 13.

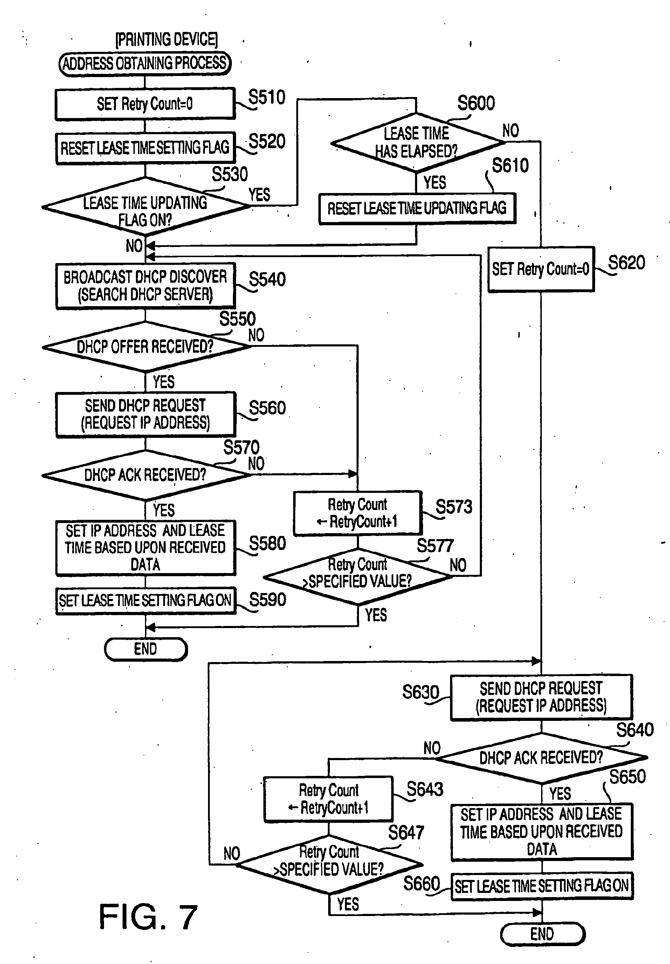

After the DHCP client process task has been booted, initially, the DHCP client process task resets a lease time updating flag to be set OFF (S410). It is noted that the value of the lease time updating flag is stored in the RAM 15. Subsequently, the DHCP client process task sets an allowed port number for the communication control portion 25 to open the aforementioned port for DHCP (S420). Thereafter, an address obtaining process is executed so that a DHCP DISCOVER message and DHCP REQUEST message are sent to the LAN via the communication control portion 25 and network interface 27. Thereby, the DHCP server 5 is required to issue (lease) the IP address for the printing device 10 (S430). It is noted that Fig. 7 is a flowchart showing the address obtaining process.

When the address obtaining process is started, the DHCP client process task sets a parameter "Retry Count" to be zero to store the value of the parameter "Retry Count" in RAM 15 (S510). In addition, after the step of S510 has been fmished, the process goes to a step of S520, and resets a lease time setting flag to be set OFF. The value of the lease time setting flag is stored in the RAM 15.

After the step of S520 has been finished, the DHCP client process task judges whether the lease time updating flag is set ON (S530). When judging that the lease time updating flag is not set ON (S530: No), the DHCP client process task broadcasts the DHCP DISCOVER message for requesting to lease the IP address to the LAN via the communication control portion 25 and network interface 27 (S540). By this operation, the DHCP client process task searches available DHCP servers.

It is noted that, in this address obtaining process, the communication with the DHCP server 5 is performed using a dedicated port (port for the DHCP). In other words, the aforementioned DHCP DISCOVER message and the below-mentioned DHCP REQUEST message are sent to the LAN with a number of the port for the DHCP as a port number of the sending source being added thereto. Moreover, in the step of S540, the IP address of the printing device 10 is not set. Therefore, information on the sending source address of a value "0.0.0.0" is added to the DHCP DICOVER message (in the case of IPv4).

In addition, when receiving the DHCP DISCOVER message, the DHCP server 5 broadcasts a DHCP OFFER message as a response message to the LAN, which is a message comprising information on the IP address that can be leased to the client and information on its own IP address that is added as information on the sending source address. It is noted that the DHCP server 5 sends the response message to the port number of the sending source comprised in the message (the DHCP DISCOVER message in this case) to which the response message is sent in response. Same applies to the below-mentioned DHCP ACK.

After sending the DHCP DISCOVER message, the DHCP client process task judges whether it has received the DHCP OFFER message via the network interface 27 and the communication control portion 25 (S550). When receiving the DHCP OFFER message within a predetermined time period, the DHCP client process task judges that it has received the DHCP OFFER message (S550: Yes) to bring the process to a step of S560. Meanwhile, when not receiving the DHCP OFFER message within the predetermined time period, the DHCP client process task does not judge that it has received the DHCP OFFER message (S550: No) to bring the process to a step of S573.

When the process goes to the step of S560 based upon the judgment of "Yes" in the step of S550, the DHCP client process task selects one of the DHCP servers 5 that are judged available based upon the received DHCP OFFER messages. Then, the DHCP client process task sends a DHCP REQUEST message to the LAN via the communication control portion 25 and the network interface 27, which is a message comprising information on the IP address of the selected DHCP server 5 for formally requesting the selected DHCP server 5 to lease the IP address.

It is noted that, when the DHCP server 5 has received the DHCP REQUEST message for requesting itself to lease the IP address, the DHCP server 5 sends a DHCP ACK message as a response message to the LAN, which is a message comprising information on the IP address to be leased and lease time and information on its own IP address as information on a sending source address.

Accordingly, after sending the DHCP REQUEST message, the DHCP client process task judges whether it has received the DHCP ACK message via the network interface 27 and the communication control portion 25 (S570). When receiving the DHCP ACK message regarding the IP address requested to be leased within a predetermined time period, the DHCP client process task judges that it has received the DHCP ACK message (S570: Yes) to bring the process to a step of S580. Meanwhile, when not receiving the DHCP ACK message within the predetermined time period, the DHCP client process task does not judge that it has received the DHCP ACK message (S570: No) to bring the process to a step of S573.

In the step of S573, the DHCP client process task increments the vale of the parameter "Retry Count" by one, and thereafter, judges whether the value of the parameter "Retry Count" is over a specified value (S577). When the DHCP client process task judges that the value of the parameter "Retry Count" is over the specified value (S577: Yes), the DHCP client process task terminates the address obtaining process. Meanwhile, when the DHCP client process task does not judge that the value of the parameter "Retry Count" is over the specified value (S577: No), the DHCP client process task brings the process back to the step of S540 to retry to access the DHCP server 5.

On the other hand, when the process goes to the step of S580, the DHCP client process task sets its own IP address for the communication control portion 25 based upon the information on the IP address leased to the printing device 10 comprised in the received DHCP ACK message and the lease time. Further, when the step of S580 is terminated, the DHCP client process task sets the lease time setting flag ON (S590). Subsequently, the address obtaining process is terminated.

In addition, when judging that the lease time setting flag is set ON (S530: Yes), the DHCP client process task brings the process to a step of S600 to judge whether the lease time of the IP address set for the communication control portion 25 has elapsed. When the lease time has elapsed (S600: Yes), the DHCP client process task resets the lease time updating flag to be set OFF (S610). Thereafter, the process goes to the step of S540.

On the other hand, when it is not judged that the lease time has elapsed (S600: No), the DHCP client process task sets the value of the parameter "Retry Count" to be zero (S620). Subsequently, the DHCP client process task sends the DHCP REQUEST message to the same DHCP server 5 on the LAN as the DHCP server 5 selected in the previous step of S560 via the communication control portion 25 and the network interface 27 (S630).

After that, the DHCP client process task judges whether it has received the DHCP ACK message via the network interface 27 and the communication control portion 25 (S640). When the DHCP client process task has received the DHCP ACK message regarding the IP address requested to be leased within a predetermined time period, the DHCP client process task judges that it has received the DHCP ACK message (S640: Yes) to bring the process to a step of S650. Meanwhile, when the DHCP client process task has not received the DHCP ACK message within the predetermined time period, the DHCP client process task judges that it has not received the DHCP ACK message (S640: No) to bring the process to a step of 5643.

In the step of S643, the DHCP client process task increments the value of the parameter "Retry Count" by one, and thereafter, judges whether the value of the parameter "Retry Count" is over a specified value (S647). When the DHCP client process task judges that the value of the parameter "Retry Count" is over the specified value (S647: Yes), the address obtaining process is terminated. Meanwhile, when the DHCP client process task does not judge that the value of the parameter "Retry Count" is over the specified value (S647: No), the DHCP client process task brings the process to a step of S630 to retry to access the DHCP server 5.

On the other hand, when the process goes to the step of S650, the DHCP client process task sets its own IP address for the communication control portion 25 based upon the information on the IP address leased to the printing device 10 and the lease time comprised in the received DHCP ACK message. In addition, after the step of S650, the DHCP client process task sets the lease time setting flag ON (S660). Subsequently, the address obtaining process is terminated.

Moreover, when the address obtaining process in the step of S430 is ended, the DHCP client process task cancels the number of the allowed port set for the communication control portion 25, and closes the aforementioned port for the DHCP (S440). Further, after the step of S440, the DHCP client process task judges whether the lease time setting flag is set ON (S450). When the DHCP client process task judges that the lease time setting flag is set ON (S450: Yes), the process goes to a step of S460.

In the step of S460, the DHCP client process task sets a value of a parameter "Sleep Time" to be half of the lease time set in the step of S580 or S650. Namely, the parameter "Sleep Time" is represented as follows:

$$\text{Sleep Time} = \text{lease time} \times 0.5.$$

After this setting, the DHCP client process task sets the lease time updating flag ON (S470), and starts up a time counter (not shown) (S490). After starting up the time counter, the DHCP client process task waits ready based upon the count value of the time counter until a time period corresponding to the value shown by the parameter "Sleep Time" has elapsed (S495). When the time period corresponding to the value shown by the parameter "Sleep Time" has elapsed (S495: Yes), the DHCP client process task brings the process back to the step of S420 to execute the steps of S420 and later.

It is noted that the parameter "Sleep Time" is set to be half of the lease time in the step of S460 for a reason that the IP address is re-obtained from the DHCP server 5 well in advance of the time of validity (lease time) of the IP address set for the printing device 10 having elapsed. When the lease time of the IP address expires, the printing device 10 cannot join the TCP/IP network. For this reason, The DHCP client process task communicates with the DHCP server 5 before the time of validity of the set IP address expires, and repeatedly executes the process for setting the IP address for the printing device 10 in the steps S420 to S495.

In addition, when judging that the lease time setting flag is set OFF (S450: No), the DHCP client process task sets the parameter "Sleep Time" to be a specified time period T1 (for example, T1 = 3 minutes) (S480). Thereafter, the DHCP client process task brings the process to the step of S490 to execute the aforementioned process.

In addition, the communication control portion 25, which is to be booted prior to the DHCP client process task, executes a receiving control process shown in Fig. 8 after it has been booted. Fig. 8 is a flowchart showing the receiving control process repeatedly executed by the communication control portion 25. It is noted that the aforementioned filtering function is attained in the receiving control process.

When executing the receiving control process, the communication control portion 25 waits ready until the network interface 27 has received data (an IP packet) from a device on the LAN (S810). When the network interface 27 has received the data (S810: Yes), the communication control portion 25 judges whether the filtering function is set ON based upon the filtering setting data stored in the NVRAM 17 (S820). More specifically, when function ON/OFF setting data comprised in the filtering setting data shows a value of "valid", it is judged that the filtering function is set ON. In contrast, when the function ON/OFF setting data shows a value of "invalid", it is judged that the filtering function is not set ON, i.e., the filtering function is set OFF. Here, when it is not judged that the filtering function is set ON (S820: No), the communication control portion 25 brings the process to a step of S870 to accept data received by the network interface 27. Namely, the communication control potion 25 provides the received data to a task corresponding to the port number shown in the received data. Thereafter, the receiving control process is terminated.

It is noted that the communication control portion 25 provides the data received by the network interface 27 to the corresponding task only when the port number shown in the received data is set as the allowed port number (namely, only when the corresponding port is open). When the port number shown in the received data is not set as the allowed port number, the communication control portion 25 performs an operation of renouncing the received data even in the step of S870.

On the other hand, when it is judged that the filtering function is set ON (S820: Yes), the communication control portion 25 brings the process to a step of S830 to judge whether the status flag is set ON. When it is not judged that the status flag is set ON (S830: No), the process goes to the step of S870, so that the data received by the network interface 27 are provided to the corresponding task. Thereafter, the receiving control process is terminated.

Meanwhile, when it is judged that the status flag is set ON (S830: Yes), the communication control portion 25 brings the process to a step of S840 to judge whether the mode setting data indicates a value of "allowed mode". When the mode setting data indicates the value of "allowed mode", the process goes to a step of S850.

In the step of S850, the communication control portion 25 compares the address range indicated by the target range setting data stored in the NVRAM 17 with the sending source address indicated by the received data. The communication control portion 25 then judges whether the sending source address indicated by the received data is comprised within an address range indicated by the target range setting data (S860). Based upon this judgment, the communication control portion 25 judges whether the sending source device is an acceptable target device registered based upon the information on the address range indicated by the target range setting data.

When it is judged that the sending source address indicated by the received data is comprised in the address range indicated by the target range setting data (S860: Yes), the communication control portion 25 brings the process to the step of S870 to provide the data received by the network interface 27 to the corresponding task. Thereafter, the receiving control process is terminated.

Meanwhile, when it is not judged that the sending source address indicated by the received data is comprised in the address range indicated by the target range setting data (S860: No), the communication control portion 25 brings the process to a step of S900 to judge whether the port number indicated by the received data is the port number for the DHCP. When it is judged that the port number indicated by the received data is the port number for the DHCP (S900: Yes), the communication control portion 25 brings the process to the step of S870 to provide the data received by the network interface 27 to the corresponding task (the DHCP client process task).

Namely, in this illustrative example, when the network interface 27 has received data to be transmitted to the port dedicated to the DHCP, the communication control portion 25 judges that the received data are to be accepted in the case where the judgment in the step of S900 is "Yes", even though the received data is not to be accepted in accordance with the target range setting data. Thereby, the communication control portion 25 brings the process to the step of S870 to provide the data received by the network interface 27 to the corresponding task (the DHCP client process task). Thereafter, the receiving control process is terminated.

In contrast, when it is not judged that the port number indicated by the received data is the port number for the DHCP, the communication control portion 25 brings the process to a step of S910, and renounces the data received by the network interface 27 (deletes the received data) without accepting the received data (i.e., without providing the received data to the corresponding task).

In other words, in this illustrative example, when the data received by the network interface 27 are not data to be transmitted to the port dedicated to the DHCP, the communication control portion 25 does not judge that the received data are to be accepted in accordance with the target range setting data (S900: No) to renounce the received data (5910). Thereafter, the receiving control process is terminated.

In addition, when judging that the mode setting data does not show the value of "allowed mode" (i.e., when judging the mode setting data shows the value of "forbidden mode"), the communication control portion 25 brings the process to a step of S880.

In the step of S880, the communication control portion 25 judges whether the sending source address indicated by the received data is comprised in the address range indicated by the target range setting data, comparing the address range indicated by the target range setting data stored in the NVRAM 17 with the sending source address indicated by the received data (S890).

When it is not judged that the sending source address indicated by the received data is comprised in the address range indicated by the target range setting data (S890: No), the communication control portion 25 brings the process to the step of S870 to provide the data received by the network interface 27 to the corresponding task. Thereafter, the receiving control process is terminated.

Meanwhile, when it is judged that the sending source address indicated by the received data is comprised in the address range indicated by the target range setting data (S890: Yes), the communication control portion 25 brings the process to a step of S900 to judge whether the port number indicated by the received data is the port number for the DHCP. When it is judged that the port number indicated by the received data is the port number for the DHCP (S900: Yes), the communication control portion 25 brings the process to the step of S870 to provide the data received by the network interface 27 to the corresponding task (the DHCP client process task). Thereafter, the receiving control process is terminated.

In contrast, when it is not judged that the port number indicated by the received data is the port number for the DHCP, the communication control portion 25 brings the process to a step of S910, and renounces the data received by the network interface 27 (deletes the received data) without accepting the received data (i.e., without providing the received data to the corresponding task). Subsequently, the receiving control process is terminated. Thus, the filtering function is attained.

Hereinabove, the communication system 1 in the illustrative example has been described. In this illustrative example, the communication system 1 is configured such that the filtering function of the communication control portion 25 does not work until the IP address is set for the printing device 10 after the printing device 10 has been booted with the status flag being set ON/OFF. Therefore, according to the illustrative example, the communication between the printing device 10 and the DHCP server 5 can be maintained even when the DHCP server 5 is not judged to be the acceptable target device based upon the target range setting data due to unsuitable settings for the printing device 10 configured by an administrator via the PC 30 etc.

Namely, according to the illustrative example, the printing device 10 is prevented from not being able to automatically set its own address due to the unsuitable settings for the printing device 10 configured by the administrator. Therefore, according to the illustrative example, the printing device 10 is prevented from not being able to join the TCP/IP network due to unsuitable settings of the filtering function configured for the printing device 10 by the administrator.

Moreover, in the illustrative example, the filtering function is configured not to work on the received data to be sent to the port for the DHCP. Thereby, even when the DHCP server 5 is not regarded as the acceptable target device in accordance with the target range setting data, the communication between the printing device 10 and the DHCP server 5 can be maintained.

Accordingly, in the illustrative example, even when the DHCP client process task repeatedly communicates with the DHCP server 5, obtains the information on the leased IP address, and automatically sets the address in accordance with the time of validity of the leased IP address, such operations are not interrupted by the filtering function. Therefore, according to the illustrative example, in the system that needs the continuous automatic setting of the IP address, the printing device 10 is prevented from not being able to join the TCP/IP network due to unsuitable settings for the printing device 10 configured by the administrator.

It is noted that the communication device according to one or more aspects of the present invention is not limited to the aforementioned illustrative example, and various modifications may be possible as far as they are within the teachings of the present invention. For example, although, in the aforementioned illustrative example, the address range is described with the information on the IP address and the mask information, the address range may be defined as a description of what No. to what No. Furthermore, the TCP/IP communication on the LAN may be attained by IPv4 (Internet Protocol Version 4) or IPv6.

**Claims**

1. A communication device (10), comprising:

a network interface (27);
a process executing system configured to communicate with devices (5, 30) on a network via the network interface (27), and execute a process based upon data received from the devices (5, 30) via the network interface (27);
an acceptance judging system configured to judge whether to accept the data received via the network interface (27) in accordance with a predetermined judgment criterion; and
an execution control system configured to selectively make the process executing system execute a process based upon data judged to be accepted by the acceptance judging system,

**characterized in that**:

the acceptance judging system is configured to judge data, which are received from specified kind of devices (5) of the devices (5, 30) on the network via the network interface (27) as data setting an address on the network for the communication device (10), to be accepted regardless of the pre-determined judgment criterion.

2. The communication device (10) according to claim 1,

wherein the process executing system is configured to repeatedly execute a process of communicating with the specified kind of devices (5) of said devices (5, 30) on the network before a time period during which the address set for the communication device (10) is valid elapses to set the address for the communication device (10).

3. The communication device (10) according to claim 1 or 2,

wherein the process executing system is configured to request each of the specified kind of devices to issue an address for the communication device (10) via the network interface (27) in response to starting the process to set the address for the communication device (10), and wherein the acceptance judging system is configured to judge response data to the request, which the network interface (27) has received as the data that may be used for setting the address for the communication device (10), to be accepted.

4. The communication device (10) according to claim 3,

wherein the process executing system is configured to request the specified kind of devices to issue the address for the communication device (10) via a dedicated port, and receive the response data to the request from the specified kind of devices (5) via the dedicated port, and wherein the acceptance judging system is configured to judge data, which the network interface (27) has received as data to be transmitted to the dedicated port, to be accepted.

5. The communication device (10) according to claim 3 or 4,

wherein the response data are transmitted from a DHCP (Dynamic Host Configuration Protocol) server (5), and comprises information on an IP address issued for the communication device (10), and

wherein the process executing system is configured to set an IP address for the communication device (10) based upon the information on the IP address issued for the communication device (10) that is comprised in the response data received from the DHCP server (5) via the network interface (27).

6. The communication device (10) according to claim 1 or 2,

wherein the process executing system is configured to communicate with the specified kind of devices (5) via a dedicated port, and receive the data that may be used for setting the address for the communication device from the specified kind of devices (5) of said devices (5, 30) on the network via the dedicated port; and

wherein the acceptance judging system is configured to judge data, which the network interface (27) has received as , data to be transmitted to the dedicated port, to be accepted.

7. The communication device (10) according to any of claims 1 to 6,

wherein the acceptance judging system is configured to judge data, which the network interface (27) has received as data transmitted from previously defined unacceptable devices, not to be accepted.

8. The communication device (10) according to any of claims 1 to 6,

wherein the acceptance judging system is configured to judge data, which the network interface (27) has received as data transmitted from previously defined acceptable devices, to be accepted.

9. The communication device (10) according to any of claims 1 to 8, further comprising a boot control system configured to boot the acceptance judging system and the execution control system in response to an initial address having been set for the communication device (10).

10. A communication device (10), comprising:

a network interface (27);
a process executing system configured to communicate with devices (5, 30) on a network via the network interface (27), and execute a process based upon data received from the devices (5, 30) via the network interface (27), the process executing system being configured to receive data that may be used for setting an address on the network for the communication device (10) from a specified kind of devices (5) of the devices (6,30) on the network after the communication device (10) has been booted, and execute a process for setting the address for the communication device (10) based upon the received data;
an acceptance judging system configured to judge whether to accept the data received via the network interface (27) in accordance with a predetermined judgment criterion;
an execution control system configured to selectively make the process executing system execute a process based upon data judged to be accepted by the acceptance judging system,

**characterized in that** the communication device further comprises:

a boot control system configured to boot the acceptance judging system and the execution control system in response to an initial address having been set for the communication device (10).

11. The communication device (10) according to claim 10,

wherein the acceptance judging system is configured to judge data, which the network interface (27) has received as data transmitted from previously defined unacceptable devices, not to be accepted.

12. The communication device (10) according to claim 10 or 11,

wherein the acceptance judging system is configured to judge data, which the network interface (27) has received as data transmitted from previously defined acceptable devices, to be accepted.

13. A method with which a communication device (10) comprising a network interface (27) sets an address on a network therefor, comprising:

communicating with devices (5, 30) on the network via the network interface (27) to receive data from the devices (5, 30); and
judging whether to accept the data received via the network interface (27) in said communicating as data that may be used for setting the address on the network for the communication device (10) in accordance with a predetermined judgment criterion,

**characterized in that**:

the step of judging further comprises judging data, which are received from specified kind of devices (5) of the devices (5, 30) on the network, via the network interface (27), as data for setting an address on the network for the communication device (10), to be accepted regardless of the pre-determined judgment criterion.

14. A method with which a communication device (10) comprising a network interface (27) sets an address on a network therefor, comprising:

communicating with devices (5, 30) on the network via the network interface (27) to receive data that may be used for setting an address on the network for the communication device (10) from a specified kind of devices (5) of the devices (6,30) on the network after the communication device (10) has been booted;
judging whether to accept the data received from the specified kind of devices (5) in said communicating in accordance with a predetermined judgment criterion; and
executing a process for setting the address for the communication device (10) based upon the data that is judged to be accepted in said judging,

**characterized in that**:

the steps of said judging and said executing are set ready in response to an initial address having been set for the communication device (10).

15. A computer program containing instructions for causing a computer to execute the method according to claim 13 or 14 when the program is executed on the computer.

**Patentansprüche**

1. Kommunikationsvorrichtung (10), mit:

einer Netzwerkschnittstelle (27);
einem Prozessausführungssystem, das aufgebaut ist zum Kommunizieren mit Vorrichtungen (5, 30) auf einem Netzwerk über die Netzwerkschnittstelle (27) und einen Prozess auf der Grundlage von Daten ausführt, die von den Vorrichtungen (5, 30) über die Netzwerkschnittstelle (27) empfangen sind;
einem Akzeptanzbeurteilungssystem, das aufgebaut ist zum Beurteilen, ob die über das Netzwerk (27) empfangenen Daten gemäß einem vorbestimmten Kriterium akzeptiert werden; und
einem Ausführungssteuersystem, das aufgebaut ist zum selektiven Bewirken, dass das Prozessausführungssystem einen Prozess auf der Grundlage von Daten ausführt, die von dem Akzeptanzbeurteilungssystem akzeptiert sind;
**dadurch gekennzeichnet,**
**dass** das Akzeptanzbeurteilungssystem aufgebaut ist zum Beurteilen von Daten, die von spezifizierter Art von Vorrichtungen (5) der Vorrichtungen (5, 30) auf dem Netzwerk über die Netzwerkschnittstelle (27) als Daten empfangen sind, die eine Adresse auf dem Netzwerk für die Kommunikationsvorrichtung (10) setzen, die unabhängig von dem vorbestimmten Beurteilungskriterium zu akzeptieren sind.

2. Kommunikationsvorrichtung (10) nach Anspruch 1,

bei dem das Prozessausführungssystem aufgebaut ist zum Wiederholen und Ausführen eines Prozesses von Kommunikation mit der spezifizierten Art von Vorrichtungen (5) der Vorrichtungen (5, 30) auf dem Netzwerk vor einer Zeitperiode, während der die Adresse, die für die Kommunikationsvorrichtung (10) gültig ist, als die gesetzte Adresse für die Kommunikationsvorrichtung (10) abläuft.

3. Kommunikationsvorrichtung (10) nach Anspruch 1 oder 2,

bei der das Prozessausführungssystem aufgebaut ist zum Anfordern von jeder der spezifizierten Art von Vorrichtungen zum Ausgeben einer Adresse für die Kommunikationsvorrichtung (10) über die Netzwerkschnittstelle (27) als Reaktion auf Starten des Prozesses zum Setzen der Adresse für die Kommunikationsvorrichtung (10), und
bei der das Akzeptanzbeurteilungssystem aufgebaut ist zum Beurteilen von Antwortdaten auf die Anforderung, die die Netzwerkschnittstelle (27) als die Daten empfangen hat, die benutzt werden können zum Setzen der Adresse für die Kommunikationsvorrichtung (10), die zu akzeptieren sind.

**4.** Kommunikationsvorrichtung (10) nach Anspruch 3,

bei der das Prozessausführungssystem aufgebaut ist zum Anfordern der spezifizierten Art von Vorrichtungen zum Ausgeben der Adresse für die Kommunikationsvorrichtung (10) über einen ausschließlich zugeordneten Port, und zum Empfangen der Antwortdaten auf die Anforderung von der spezifizierten Art von Vorrichtungen über den ausschließlich zugeordneten Port, und
bei der das Akzeptanzbeurteilungssystem aufgebaut ist zum Beurteilen von Daten, die die Netzwerkschnittstelle (27) als Daten empfangen hat, die zu dem ausschließlich zugeordneten Port zu übertragen sind, die akzeptieren sind.

**5.** Kommunikationsvorrichtung (10) nach Anspruch 3 oder 4,

bei der die Antwortdaten von einem DHCP-(DHCP-Protokoll)Server (5) übertragen werden und Information über eine IP-Adresse aufweisen, die für die Kommunikationsvorrichtung (10) ausgegeben ist, und
bei der das Prozessausführungssystem aufgebaut ist zum Setzen einer IP-Adresse für die Kommunikationsvorrichtung (10) auf der Grundlage der Information über die IP-Adresse, die für die Kommunikationsvorrichtung (10) ausgegeben ist, die in den Antwortdaten enthalten sind, die von dem DHCP-Server (5) über die Netzwerkschnittstelle (7) empfangen sind.

**6.** Kommunikationsvorrichtung (10) nach Anspruch 1 oder 2,

bei der das Prozessausführungssystem aufgebaut ist zum Kommunizieren mit der spezifizierten Art von Vorrichtungen (5) über einen ausschließlich zugeordneten Port und zum Empfangen der Daten, die für das Setzen der Adresse für die Kommunikationsvorrichtung von der spezifizierten Art von Vorrichtungen der Vorrichtungen (5, 30) auf dem Netzwerk über den ausschließlich zugeordneten Port empfangen sind; und
bei der das Akzeptanzbeurteilungssystem aufgebaut ist zum Beurteilen der Daten, die die Netzwerkschnittstelle (27) als Daten empfangen hat, die zu dem ausschließlich zugeordneten Port zu übertragen sind, die zu akzeptieren sind.

**7.** Kommunikationsvorrichtung (10) nach einem der Ansprüche 1 bis 6,

bei der das Akzeptanzbeurteilungssystem aufgebaut ist zum Beurteilen von Daten, die die Netzwerkschnittstelle (27) als Daten empfangen hat, die von zuvor als unakzeptabel definierte Vorrichtungen übertragen sind, die nicht zu akzeptieren sind.

**8.** Kommunikationsvorrichtung (10) nach einem der Ansprüche 1 bis 6,

bei der das Akzeptanzbeurteilungssystem aufgebaut ist zum Beurteilen von Daten, die die Netzwerkschnittstelle (27) als Daten empfangen hat, die von zuvor als akzeptabel definierten Vorrichtungen übertragen sind, die zu akzeptieren sind.

**9.** Kommunikationsvorrichtung (10) nach einem der Ansprüche 1 bis 8 weiter mit einem Bootsteuersystem, das aufgebaut ist zum Booten des Akzeptanzbeurteilungssystems und des Ausführungssteuersystems als Reaktion auf eine anfängliche Adresse, die für die Kommunikationsvorrichtung (10) gesetzt worden ist.

**10.** Kommunikationsvorrichtung (10), mit:

einer Netzwerkschnittstelle (27);
einem Prozessausführungssystem, das aufgebaut ist zum Kommunizieren mit Vorrichtungen (5, 30) auf einem Netzwerk über die Netzwerkschnittstelle (27) und zum Ausführen eines Prozesses aufgrund von Daten, die von den Vorrichtungen (5, 30) über die Netzwerkschnittstelle (27) empfangen sind, wobei das Prozessausführungssystem aufgebaut ist zum Empfangen von Daten, die benutzt werden können zum Setzen einer Adresse auf dem Netzwerk für die Kommunikationsvorrichtung (10) von einer spezifizierten Art von Vorrichtungen (5) der Vorrichtungen (5, 30) auf dem Netzwerk, nachdem die Kommunikationsvorrichtung (10) gebootet worden ist, und zum Ausführen eines Prozesses zum Setzen der Adresse für die Kommunikationsvorrichtung (10) auf der Grundlage der empfangenen Daten;
einem Akzeptanzbeurteilungssystem, das aufgebaut ist zum Beurteilen, ob die Daten, die über die Netzwerkschnittstelle (27) empfangen sind, gemäß einem vorbestimmten Beurteilungskriterium zu akzeptieren sind;
einem Ausführungssteuersystem, das zum selektiven Bewirken, dass das Prozessausführungssystem einen Prozess auf der Grundlage von Daten ausführt, die von dem Akzeptanzbeurteilungssystem akzeptiert sind,

**dadurch gekennzeichnet, dass** die Kommunikationsvorrichtung weiter aufweist:

ein Bootsteuersystem, das zum Booten des Akzeptanzbeurteilungssystems und des Ausführungssteuersystems als Reaktion auf eine anfängliche Adresse aufgebaut ist, die für die Kommunikationsvorrichtung (10) gesetzt worden ist.

11. Kommunikationsvorrichtung (10) nach Anspruch 10,

bei der das Akzeptanzbeurteilungssystem aufgebaut ist zum Beurteilen von Daten, die die Netzwerkschnittstelle (27) als Daten empfangen hat, die von zuvor als unakzeptabel definierten Vorrichtungen übertragen sind, die nicht zu akzeptieren sind.

12. Kommunikationsvorrichtung (10) nach Anspruch 10 oder 11,

bei der das Akzeptanzbeurteilungssystem aufgebaut ist zum Beurteilen von Daten, die die Netzwerkschnittstelle 27 als Daten empfangen hat, die von zuvor als akzeptabel definierten Vorrichtungen übertragen sind, die zu akzeptieren sind.

13. Verfahren, mit dem eine Kommunikationsvorrichtung (10) mit einer Netzwerkschnittstelle (27) eine Adresse auf einem Netzwerk dafür setzt, mit:

Kommunizieren mit Vorrichtungen (5, 30) auf dem Netzwerk über die Netzwerkschnittstelle (27) zum Empfangen von Daten von den Vorrichtungen (5, 30); und
Beurteilen, ob die über die Netzwerkschnittstelle (27) bei der Kommunikation als Daten empfangene Daten zum Setzen der Adresse auf dem Netzwerk für die Kommunikationsvorrichtung (10) benutzt werden können, gemäß einem vorbestimmten Beurteilungskriterium,
**dadurch gekennzeichnet,**
**dass** der Schritt des Beurteilens weiter Beurteilen von Daten aufweist, die von spezifizierter Art von Vorrichtungen (5) der Vorrichtungen (5, 30) auf dem Netzwerk über die Netzwerkschnittstelle (27) als Daten zum Setzen einer Adresse auf dem Netzwerk für die Kommunikationsvorrichtung (10) empfangen sind, die unabhängig von dem vorbestimmten Beurteilungskriterium zu akzeptieren sind.

14. Verfahren, mit dem eine Kommunikationsvorrichtung (10) mit einer Netzwerkschnittstelle (27) eine Adresse auf einem Netzwerk dafür setzt, mit:

Kommunizieren mit Vorrichtungen (5, 30) auf dem Netzwerk über die Netzwerkschnittstelle (27) zum Empfangen von Daten, die zum Setzen einer Adresse auf dem Netzwerk für die Kommunikationsvorrichtung (10) von einer spezifizierten Art von Vorrichtungen (5) der Vorrichtungen (5, 30) auf dem Netzwerk benutzt werden können, nachdem die Kommunikationsvorrichtung (10) gebootet worden ist,
Beurteilen, ob die von der spezifizierten Art von Vorrichtungen (5) bei der Kommunikation gemäß einem vorbestimmten Beurteilungskriterium zu akzeptieren sind; und
Ausführen eines Prozesses zum Setzen der Daten für die Kommunikationsvorrichtung (10) auf der Grundlage der Daten, die bei der Beurteilung als zu akzeptieren beurteilt sind,

**dadurch gekennzeichnet,**
**dass** die Schritte des Beurteilens und des Ausführens fertig gesetzt werden als Reaktion auf eine anfängliche Adresse, die für die Kommunikationsvorrichtung (10) gesetzt worden ist.

15. Computerprogramm, das Anweisungen zum Bewirken enthält, dass ein Computer das Verfahren nach Anspruch 13 oder 14 ausführt, wenn das Programm auf dem Computer ausgeführt wird.

**Revendications**

1. Dispositif de communication (10), comprenant :

une interface de réseau (27) ;
un système d'exécution de processus configuré pour communiquer avec des dispositifs (5, 30) sur un réseau via l'interface de réseau (27) et exécuter un processus basé sur des données reçues à partir des dispositifs (5, 30) via l'interface de réseau (27) ;
un système de jugement d'acceptation configuré pour juger si accepter ou non les données reçues via l'interface de réseau (27) en fonction d'un critère de jugement prédéterminé ; et
un système de commande d'exécution configuré pour faire exécuter un processus au système d'exécution de processus sur la base de données jugées comme étant acceptées par le système de jugement d'acceptation,

**caractérisé en ce que** :

le système de jugement d'acceptation est configuré pour juger des données, qui sont reçues à partir d'un type spécifié de dispositifs (5) parmi les dispositifs (5, 30) sur le réseau via l'interface de réseau (27) comme des données établissant une adresse sur le réseau pour le dispositif de communication (10), comme étant acceptées indépendamment du critère de jugement prédéterminé.

2. Dispositif de communication (10) selon la revendication 1,
dans lequel le système d'exécution de processus est configuré pour exécuter à plusieurs reprises un processus de communication avec le type spécifié de dispositifs (5) parmi les dispositifs (5, 30) sur le réseau avant qu'une période, durant laquelle l'adresse établie pour le dispositif de communication (10) est valide, n'expire pour établir l'adresse pour le dispositif de communication (10).

3. Dispositif de communication (10) selon la revendication 1,
dans lequel le système d'exécution de processus est configuré pour demander à chacun du type spécifié de dispositifs d'émettre une adresse pour le dispositif de communication (10) via l'interface de réseau (27) en réponse au démarrage du processus pour établir l'adresse pour le dispositif de communication (10), et
dans lequel le système de jugement d'acceptation est configuré pour juger des données de réponse à la demande, que l'interface de réseau (27) a reçues comme les données qui peuvent être utilisées pour établir l'adresse pour le dispositif de communication (10), comme étant acceptées.

4. Dispositif de communication (10) selon la revendication 3,
dans lequel le système d'exécution de processus est configuré pour demander au type spécifié de dispositifs d'émettre une adresse pour le dispositif de communication (10) via un port dédié et recevoir les données de réponse à la demande à partir du type spécifié de dispositifs (5) via le port dédié, et
dans lequel le système de jugement d'acceptation est configuré pour juger des données, que l'interface de réseau (27) a reçues comme les données à transmettre au port dédié, comme étant acceptées.

5. Dispositif de communication (10) selon la revendication 3 ou 4,
dans lequel les données de réponse sont transmises à partir d'un serveur DHCP (protocole de configuration d'hôte dynamique) (5) et comprennent des informations sur une adresse IP émise pour le dispositif de communication (10), et
dans lequel le système d'exécution de processus est configuré pour établir une adresse IP pour le dispositif de communication (10) sur la base des informations sur l'adresse IP émise pour le dispositif de communication (10) qui est comprise dans les données de réponse reçues à partir du serveur DHCP (5) via l'interface de réseau (27) .

6. Dispositif de communication (10) selon la revendication 1 ou 2,
dans lequel le système d'exécution de processus est configuré pour communiquer avec le type spécifié de dispositifs (5) via un port dédié et recevoir les données qui peuvent être utilisées pour établir l'adresse pour le dispositif de communication à partir du type spécifié de dispositifs (5) parmi les dispositifs (5, 30) sur le réseau via le port dédié, et
dans lequel le système de jugement d'acceptation est configuré pour juger des données, que l'interface de réseau (27) a reçues comme les données à transmettre au port dédié, comme étant acceptées.

7. Dispositif de communication (10) selon l'une quelconque des revendications 1 à 6,
dans lequel le système de jugement d'acceptation est configuré pour juger des données, que l'interface de réseau (27) a reçues comme des données transmises à partir de dispositifs précédemment définis inacceptables, comme n'étant pas acceptées.

8. Dispositif de communication (10) selon l'une quelconque des revendications 1 à 6,
dans lequel le système de jugement d'acceptation est configuré pour juger des données, que l'interface de réseau (27) a reçues comme des données transmises à partir de dispositifs précédemment définis acceptables, comme étant acceptées.

9. Dispositif de communication (10) selon l'une quelconque des revendications 1 à 8, comprenant en outre un système de commande de lancement configuré pour lancer le système de jugement d'acceptation et le système d'exécution de processus en réponse à une adresse initiale ayant été établie pour le dispositif de communication (10).

10. Dispositif de communication (10), comprenant :

une interface de réseau (27) ;
un système d'exécution de processus configuré pour communiquer avec des dispositifs (5, 30) sur un réseau via l'interface de réseau (27) et exécuter un processus basé sur des données reçues à partir des dispositifs (5, 30) via l'interface de réseau (27), le système d'exécution de processus est configuré pour recevoir des données qui peuvent être utilisées pour établir une adresse pour le dispositif de communication (10) à partir d'un type spécifié de dispositifs (5) parmi les dispositifs (6, 30) sur le réseau après que le dispositif de communication (10) a été lancé, et exécuter un processus pour établir l'adresse pour le dispositif de communication (10) sur la base des données reçues ;
un système de jugement d'acceptation configuré pour juger si accepter ou non les données reçues via l'interface de réseau (27) en fonction d'un critère de jugement prédéterminé ;
un système de commande d'exécution configuré pour faire exécuter un processus au système d'exécution de processus sur la base de données jugées comme étant acceptées par le système de jugement d'acceptation,

**caractérisé en ce que** le dispositif de communication comprend en outre :

un système de commande de lancement configuré pour lancer le système de jugement d'acceptation et le système d'exécution de processus en réponse à une adresse initiale ayant été établie pour le dispositif de communication (10).

11. Dispositif de communication (10) selon la revendication 10,
dans lequel le système de jugement d'acceptation est configuré pour juger des données, que l'interface de réseau (27) a reçues comme des données transmises à partir de dispositifs précédemment définis inacceptables, comme n'étant pas acceptées.

12. Dispositif de communication (10) selon la revendication 10 ou 11,
dans lequel le système de jugement d'acceptation est configuré pour juger des données, que l'interface de réseau (27) a reçues comme des données transmises à partir de dispositifs précédemment définis acceptables, comme étant acceptées.

13. Procédé avec lequel un dispositif de communication (10), comprenant une interface de réseau (27) établit une adresse sur un réseau pour celui-ci, comprenant :

la communication avec des dispositifs (5, 30) sur un réseau via l'interface de réseau (27) pour recevoir des données reçues à partir des dispositifs (5, 30) ; et
le jugement pour accepter ou non les données reçues via l'interface de réseau (27) dans ladite communication comme des données qui peuvent être utilisées pour établir une adresse sur le réseau pour le dispositif de communication (10) en fonction d'un critère de jugement prédéterminé,

**caractérisé en ce que** :

l'étape de jugement d'acceptation comprend en outre le jugement de données, qui sont reçues à partir d'un type spécifié de dispositifs (5) parmi les dispositifs (5, 30) sur le réseau via l'interface de réseau (27), comme des données pour établir une adresse sur le réseau pour le dispositif de communication (10), comme étant acceptées indépendamment du critère de jugement prédéterminé.

14. Procédé avec lequel un dispositif de communication (10), comprenant une interface de réseau (27) établit une adresse sur un réseau pour celui-ci, comprenant :

la communication avec des dispositifs (5, 30) sur un réseau via l'interface de réseau (27) pour recevoir des données qui peuvent être utilisées pour établir une adresse sur le réseau pour le dispositif de communication (10) à partir d'un type spécifié de dispositifs (5) parmi les dispositifs (6, 30) sur le réseau après que le dispositif de communication (10) a été lancé ;
le jugement pour accepter ou non les données reçues à partir du type spécifié de dispositifs (5) dans ladite communication en fonction d'un critère de jugement prédéterminé ; et
l'exécution d'un processus pour établir une adresse pour le dispositif de communication (10) sur la base des données qui sont jugées comme étant acceptées dans ledit jugement,

**caractérisé en ce que** :

les étapes dudit jugement et de ladite exécution sont rendues prêtes en réponse à une adresse initiale ayant été établie pour le dispositif de communication (10).

15. Programme d'ordinateur contenant des instructions pour amener un ordinateur à exécuter le procédé selon la revendication 13 ou 14 quand le programme est exécuté sur l'ordinateur.

FIG. 1

EP 1 729 485 B1

FIG. 2

EP 1 729 485 B1

(FILTERING SETTING DATA)

| FUNCTION ON/OFF DATA (VALID/INVALID) |
|---|
| MODE SETTING DATA (ALLOWED MODE/ FORBIDDEN MODE) |
| TARGET RANGE SETTING DATA (INCLUDING ONE OR MORE ADDRESS RANGES) |

ADDRESS RANGE
ADDRESS RANGE

| ADDRESS RANGE |
|---|
| IP ADDRESS |
| MASK INFORMATION |

# FIG. 3

FIG. 4

(SETTING COMMAND DATA)

| FUNCTION ON/OFF SETTING DATA |
| MODE SETTING DATA |
| TARGET RANGE SETTING DATA |

30 PC

(SETTING OPERATION BY USER)

10 (PRINTING DEVICE)

SETTING CHANGE PROCESS TASK → FILTERING SETTING DATA

[PRINTING DEVICE]

BOOT PROCESS

INITIALIZING PROCESS — S110

RESET STATUS FLAG — S120

BOOT COMMUNICATION CONTROL PORTION — S125

BOOT DHCP CLIENT PROCESS TASK — S130

S140

IP ADDRESS SET? — YES

NO

S150

CONDITION SATISFIED? — NO

YES

SET STATUS FLAG ON — S160

RUN VARIOUS APPLICATION (BOOT PRINTING JOB REGISTRATION PROCESS TASK ETC.) — S170

END

FIG. 5

[PRINTING DEVICE]

DHCP CLIENT PROCESS

RESET LEASE TIME
UPDATING FLAG — S410

OPEN DEDICATED PORT — S420

ADDRESS OBTAINING
PROCESS — S430

CLOSE DEDICATED PORT — S440

S450

LEASE TIME SETTING
FLAG ON?

NO → 

YES

SET Sleep Time=
LEASE TIME × 0.5 — S460

SET Sleep Time=
SPECIFIED TIME PERIOD
T1(e. g. T1=3min) — S480

SET LEASE TIME UPDATING
FLAG ON — S470

START UP TIME COUNTER — S490

S495

NO

Sleep Time HAS ELAPSED?

YES

# FIG. 6

[PRINTING DEVICE]
(ADDRESS OBTAINING PROCESS)

SET Retry Count=0 — S510

RESET LEASE TIME SETTING FLAG — S520

S530
LEASE TIME UPDATING FLAG ON?
YES → S600 LEASE TIME HAS ELAPSED? — NO
NO ↓
YES → RESET LEASE TIME UPDATING FLAG — S610

BROADCAST DHCP DISCOVER (SEARCH DHCP SERVER) — S540

SET Retry Count=0 — S620

S550
DHCP OFFER RECEIVED? — NO

YES
SEND DHCP REQUEST (REQUEST IP ADDRESS) — S560

S570
DHCP ACK RECEIVED? — NO

Retry Count ← RetryCount+1 — S573

YES
SET IP ADDRESS AND LEASE TIME BASED UPON RECEIVED DATA — S580

Retry Count >SPECIFIED VALUE? — S577 — NO

SET LEASE TIME SETTING FLAG ON — S590
YES

END

SEND DHCP REQUEST (REQUEST IP ADDRESS) — S630

S640 DHCP ACK RECEIVED?
NO
Retry Count ← RetryCount+1 — S643
YES S650
SET IP ADDRESS AND LEASE TIME BASED UPON RECEIVED DATA

Retry Count >SPECIFIED VALUE? — S647
NO
YES
SET LEASE TIME SETTING FLAG ON — S660

END

FIG. 7

[PRINTING DEVICE]

**RECEIVING CONTROL PROCESS**

S810 — DATA RECEIVED?
- NO → (loop back)
- YES ↓

S820 — FILTERING FUNCTION ON?
- NO → (branch)
- YES ↓

S830 — STATUS FLAG ON?
- NO → (branch)
- YES ↓

S840 — ALLOWED MODE?
- YES ↓
- NO → S880

S850 — COMPARE ADDRESS RANGE INDICATED BY TARGET RANGE SETTING DATA WITH SENDING SOURCE ADDRESS INDICATED BY RECEIVED DATA

S860 — SENDING SOURCE ADDRESS WITHIN ADDRESS RANGE?
- YES ↓
- NO → (branch)

(A)

S870 — ACCEPT RECEIVED DATA (PROVIDE RECEIVED DATA TO CORRESPONDING TASK)

S880 — COMPARE ADDRESS RANGE INDICATED BY TARGET RANGE SETTING DATA WITH SENDING SOURCE ADDRESS INDICATED BY RECEIVED DATA

S890 — SENDING SOURCE ADDRESS WITHIN ADDRESS RANGE?
- YES ↓
- NO → (A)

S900 — PORT FOR DHCP?
- YES → (A)
- NO ↓

S910 — RENOUNCE RECEIVED DATA

**RETURN**

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005159972 A
- US 2005097360 A
- US 2005114544 A
- WO 2004042999 A